(19) Europäisches Patentamt
European Patent Office
Office européen des brevets

(11) **EP 2 599 596 B1**

(12) **EUROPÄISCHE PATENTSCHRIFT**

(45) Veröffentlichungstag und Bekanntmachung des Hinweises auf die Patenterteilung:
**21.12.2016  Patentblatt 2016/51**

(51) Int Cl.:
***B25J 19/00*** *(2006.01)*

(21) Anmeldenummer: **12007859.7**

(22) Anmeldetag: **21.11.2012**

(54) **Manipulatoranordnung und Verfahren zum Betreiben der Manipulatoranordnung**

Manipulator assembly and method for operating the same

Agencement de manipulation et procédé de fonctionnement de l'agencement de manipulation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2011  DE 102011120037**

(43) Veröffentlichungstag der Anmeldung:
**05.06.2013  Patentblatt 2013/23**

(73) Patentinhaber: **KUKA Roboter GmbH**
**86165 Augsburg (DE)**

(72) Erfinder:
• **Roth, Stefan**
**86485 Eisenbrechtshofen (DE)**
• **Ruf, Michael**
**86153 Augsburg (DE)**

(74) Vertreter: **Schlotter, Alexander Carolus Paul**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
**EP-A2- 0 124 738     US-A1- 2009 105 877**

**Beschreibung**

Die vorliegende Erfindung betrifft eine Manipulatoranordnung mit einem oder mehreren Manipulatoren, insbesondere Industrierobotern, und wenigstens einer Steuerung sowie ein Verfahren zum Betreiben einer solchen Manipulatoranordnung.

Manipulatoren, insbesondere Roboter im industriellen Einsatz, werden häufig im hochalternierenden Betrieb verwendet. Um dieselbe Aufgabe mehrmals hintereinander so schnell wie möglich durchzuführen, fährt der Manipulator üblicherweise einen programmierten Bahnpunkt mit maximal möglicher Beschleunigung an und bremst gerade noch rechtzeitig vor diesem Bahnpunkt mit maximal möglicher Verzögerung ab, um die am Bahnpunkt vorgeschriebene Geschwindigkeit einzunehmen, insbesondere dort anzuhalten. Anschließend wird der nächste Bahnpunkt wieder mit maximal möglicher Beschleunigung angefahren usw. Beispiele sind etwa Schweiß-, Lackier- und Kommissionieraufgaben, die von Industrierobotern automatisiert abgearbeitet werden.

Während der Beschleunigungsphasen bauen die Manipulatoren kinetische Energie auf. Während der Verzögerungsphasen wird diese durch die Antriebe der Manipulatoren in elektrische Energie umgewandelt und danach über Bremschopper in Ballastwiderständen in Wärme dissipiert, so dass die Zwischenkreisspannung der Manipulatoren maximal zulässige Spannungen nicht überschreitet. Je nach Applikation gilt dieser Energieverlust auch für die umgesetzte potentielle Energie.

Dieser Verlust von Energie an die Umwelt, insbesondere durch die in den Bremswiderständen dissipierte Wärme, bedingt eine hohe Energieaufnahme während des Betriebs des bzw. der Manipulatoren und stellt eine wesentliche Effizienzgradbeeinträchtigung heutiger Manipulatoranordnungen dar.

Eine typische Maßnahme zur Reduktion des Energiebedarfs ist der Gewichtsausgleich bei Industrierobotern, wie er insbesondere in der EP 0 914 911 B1 vorgeschlagen wird. Ein solcher Gewichtsausgleich bewirkt eine Reduktion der Unterschiede der potentiellen Energien bei unterschiedlichen Roboterposen, so dass, vorzugsweise in der Grundachse des Roboters, schwächere Antriebe und Bremsen benötigt werden, um bei gleichen Bewegungen weniger Energie zu verbrauchen.

Aus der DE 10 2009 054 818 A1 ist ein elektrischer Energiespeicher bekannt, durch den ein Zwischenkreis Energie speichern kann. Dieser Energiespeicher wird mit einem Kondensator realisiert. Ein wesentlicher Nachteil eines solchen Speichers ist die geringe Speicherkapazität, welche nur ein Bruchteil der Energie darstellt, die von einem Roboter pro Bewegung umgesetzt wird.

Aus der DE 10 2008 019 294 A1 ist eine Rückspeisung von überschüssiger Energie aus einem Zwischenkreis in ein Energienetz bekannt. Nachteile dieser Methode bestehen insbesondere in den zusätzlich anfallenden Kosten für die Transformationseinrichtung von Gleichstrom in Wechselstrom und die dabei auftretenden zusätzlichen Energieverluste, insbesondere in den Gleichrichtern und in den Kommutierungsinduktivitäten.

Die US 2009/0105877 A1 betrifft ein Verfahren und eine Vorrichtung zur Absorption recycelbarer Energie aus einem Verzögerungsprozess eines Industrierobotersystems. Ziel ist es, beim Bremsen anfallende elektrische Energie in kinematische Energie umzuwandeln, um diese für Beschleunigungen der Roboterachsen bereitzuhalten. Dazu geht die US 2009/0105877 A1 von einem Robotersystem aus, welches eine Robotersteuerung, über die mehrere elektrische Achsmotoren ("Drive Unit") betrieben werden, und eine elektronische Motorbremse umfasst, welche über ein Schwungrad verfügen kann, um mechanische Energie zu speichern und danach zum Betreiben eines Motors zu verwenden.

Die Aufgabe der vorliegenden Erfindung ist es, die Effizienz einer Manipulatoranordnung zu verbessern.

Diese Aufgabe wird durch eine Manipulatoranordnung mit den Merkmalen des Anspruchs 1 gelöst. Anspruch 12 stellt ein Verfahren zum Betreiben einer erfindungsgemäßen Manipulatoranordnung unter Schutz, die Unteransprüche betreffen bevorzugte Weiterbildungen.

Eine erfindungsgemäße Manipulatoranordnung weist einen oder mehrere Manipulatoren, insbesondere Industrieroboter, auf, von denen vorzugsweise einer oder mehrere, insbesondere alle mit mehreren, insbesondere vier, sechs, oder sieben Freiheitsgraden ausgestattet sein können, wobei ein Freiheitsgrad insbesondere durch eine Achse des Manipulators realisiert wird. Vorzugsweise weist jede Achse einen Antrieb auf, der bevorzugt ein Getriebe und wenigstens einen Elektromotor, der vorzugsweise auch generatorisch betreibbar ist, insbesondere Synchronmotor oder einem Asynchronmotor, aufweist. Weiterhin weist die erfindungsgemäße Manipulatoranordnung eine oder mehrere Steuerungen auf, wobei eine Steuerung vorzugsweise dazu eingerichtet ist, einen Manipulator oder mehrere, insbesondere alle Manipulatoren der Manipulatoranordnung zu steuern.

Erfindungsgemäß weist die Manipulatoranordnung einen mechanischen Energiespeicher auf, um Energie von einem oder mehreren, insbesondere von allen, Manipulatoren der Manipulatoranordnung mechanisch zu speichern, insbesondere zwischenzuspeichern.

Durch die Speicherung mechanischer Energie in einem mechanischen Energiespeicher, kann Energie eines oder mehrerer Manipulatoren, insbesondere beim Verzögern, gespeichert und vorzugsweise für eine spätere Verwendung bereitgestellt werden. Eine solche Verwendung ist vorzugsweise ein Betrieb eines oder mehrerer Manipulatoren einer Manipulatoranordnung, insbesondere ein Steuern und/oder Bewegen, insbesondere Beschleunigen und/oder Bremsen eines oder mehrerer Manipulatoren. Zusätzlich oder alternativ kann diese Energie für Komponenten eines oder mehrerer Manipulatoren genutzt werden, insbesondere zum Betreiben eines Werkzeugs. Zusätzlich oder alternativ kann diese Energie für weitere, insbesondere elektrische Verbraucher genutzt werden, die sich vorzugsweise in der Umgebung der Manipulatoranordnung befinden, insbesondere eine Roboterzelle, ein Computer, eine Beleuchtungseinrichtung, eine Anzeigeeinrichtung und/oder eine Wärmetauschanlage. Dadurch ergibt sich eine höhere Effizienz hinsichtlich des Energieverbrauchs der Manipulatoranordnung.

Nach einer bevorzugten Weiterbildung ist der mechanische Energiespeicher mit einer elektrischen Maschine gekoppelt, um elektrische und mechanische Energie ineinander zu überführen. Eine elektrische Maschine im Sinn der vorliegenden Erfindung kann insbesondere eine oder mehrere Elektromotoren zur Umwandlung von elektrischer in mechanische Energie und/oder einen oder mehrere Generatoren zur Umwandlung mechanischer Energie in elektrische Energie aufweisen. Zusätzlich oder alternativ kann eine elektrische Maschine dazu eingerichtet sein, wahlweise in einem motorischen Betrieb elektrische in mechanische Energie umzuwandeln und in einem generatorischen Betrieb mechanische Energie in elektrische Energie umzuwandeln.

Vorzugsweise ist die Manipulatoranordnung derart eingerichtet, dass eine von den Manipulatorantrieben, insbesondere beim Abbremsen und/oder gebremsten Absenken, erzeugte elektrische Energie teilweise oder vollständig zur Versorgung der elektrischen Maschine(n) des mechanischen Energiespeichers genutzt bzw. in diese eingespeist, in die zu speichernde Energieform umgewandelt und so gespeichert wird. Bevorzugt ist die Manipulatoranordnung und/oder der Energiespeicher zusätzlich oder alternativ dazu eingerichtet, Energie aus dem mechanischen Energiespeicher in elektrische Energie zu überführen und als Energie, insbesondere zum Beschleunigen und/oder Anheben, zu nutzen.

Vorzugsweise wird diese Energie für einen oder mehrere Manipulatoren bereitgestellt, insbesondere zum Betreiben eines oder mehrerer Manipulatorantriebe eines oder mehrerer Manipulatoren. Vorteilhaft ist ein bidirektionaler Energieaustausch zwischen dem mechanischen Energiespeicher und einem oder mehreren Manipulator(antrieb)-en möglich. Es erfolgt dann eine teilweise oder vollständige Speicherung der Energie eines oder mehrerer Manipulatoren in einem mechanischen Energiespeicher und es erfolgt ein Betrieb eines oder mehrerer Manipulatoren teilweise oder vollständig durch die in dem mechanischen Energiespeicher enthaltene Energie. Ein Vorteil eines bidirektionalen Energieaustausches besteht darin, dass mechanische Energie, die ein Manipulator während des Verzögerungsvorgangs in elektrische Energie umwandelt, gespeichert und diese Energie dazu verwendet werden kann, diesen und/oder einen anderen Manipulator, insbesondere in einer nächsten Phase, wieder zu beschleunigen. Bei einem hochalternierenden Betrieb der Manipulatoren erfolgt der Energieaustausch vorteilhafterweise zeitnah.

Erfindungsgemäß weist der mechanische Energiespeicher mehrere voneinander entkoppelte Energiespeichermittel auf. In einer bevorzugten Ausführung können ein oder mehrere Energiespeichermittel derart ausgebildet sein, dass elektrische Energie verlustoptimiert für eine lange Zeit gespeichert werden kann. Ein Energiespeichermittel im Sinn der Erfindung ist vorzugsweise dazu eingerichtet, während einer ersten Phase in einem motorischen Betrieb elektrische Energie in mechanische Energie zu wandeln und in einer zweiten Phase in einem generatorischen Betrieb mechanische in elektrische Energie zu wandeln. Vorzugsweise weist der mechanische Energiespeicher mehrere Energiespeichermittel auf, die sich in Speicherkapazität, Aufladeleistung und/oder Entladeleistung unterscheiden. Gleichermaßen können zwei oder mehr gleiche Energiespeichermittel vorgesehen sein. Ein mechanischer Energiespeicher mit mehreren Energiespeichermitteln kann elektrische Energie eines oder mehrerer Manipulatoren, insbesondere wenigstens teilweise als mechanische Energie speichern und wieder elektrische Energie, insbesondere für einen oder mehrere

Manipulatoren der Manipulatoranordnung bereitstellen. Vorteilhaft kann ein gleichzeitiger bidirektionaler Betrieb erfolgen. Vorteilhaft kann durch diese gleichzeitig möglichen Auflade- und Entladevorgänge die Effizienz des mechanischen Energiespeichers weiter gesteigert werden.

In einer Ausführung ist der mechanische Energiespeicher so eingerichtet, dass ein oder mehrere Energiespeichermittel des mechanischen Energiespeichers jeweils einem bestimmten Manipulator, insbesondere einem bestimmten Manipulatorantrieb, zugeordnet sind. Zusätzlich oder alternativ können ein oder mehrere Energiespeichermittel verschiedenen Manipulatoren, insbesondere Manipulatorantrieben, zugeordnet sein. Eine solche Zuordnung kann sowohl statisch als auch dynamisch erfolgen. Eine statische Zuordnung im Sinn der Erfindung ist insbesondere eine feste Zuordnung zwischen einem oder mehreren Energiespeichermitteln und einem oder mehreren Manipulatoren und/oder Manipulatorantrieben. Eine statische Zuordnung kann insbesondere kapazitätsabhängig und/oder leistungsabhängig, insbesondere entsprechend einer Nennleistung eines Manipulatorantriebs und/oder eines Energiespeichermittels erfolgen. Beispielsweise können einem oder mehreren leistungsstärkeren Antrieben ein erstes Energiespeichermittel und einem oder mehreren leistungsschwächeren Antrieben ein zweites Energiespeichermittel fest zugeordnet sein. Eine dynamische Zuordnung im Sinn der Erfindung kann insbesondere auf Basis vorgegebener Kriterien erfolgen und wird vorzugsweise entsprechend vorgegebener Ereignisse, insbesondere periodisch, neu festgelegt. Beispielsweise können Energiespeichermittel dynamisch denjenigen Manipulatoren zugeordnet werden, die gerade im Betrieb sind. Gleichermaßen können demselben Manipulator wahlweise unterschiedliche Energiespeichermittel zugeordnet werden, etwa je nachdem, wie viel Energie die einzelnen Energiespeichermittel bereits gespeichert haben.

Vorzugsweise ist eine bestimmte Zuordnung nur für ein vorbestimmtes Zeitintervall gültig und wird danach durch eine vorbestimmte Zuordnung ersetzt. Kriterien zur Festlegung einer Zuordnung können insbesondere ein Ladezustand des Energiespeichermittels und/oder eine geschätzten Energie sein, die gespeichert oder bereitgestellt werden soll. Letzteres bietet sich insbesondere dann an, wenn die Energiespeichermittel verschiedene Dimensionierungen aufweisen und sich beispielsweise in Energiespeicherkapazität unterscheiden. Eine dynamische Zuordnung kann insbesondere kapazitätsabhängig und/oder leistungsabhängig, insbesondere entsprechend einer Nennleistung eines Manipulatorantriebs und/oder eines Energiespeichermittels erfolgen. Unter einer Zuordnung wird vorliegend insbesondere ein Energietransfer zwischen Manipulator(antrieb)(en) und Energiespeichermittel(n) bzw. eine Verbindung bzw. Koppelung für einen solchen Energietransfer verstanden.

Nach einer bevorzugten Weiterbildung weist die Manipulatoranordnung einen elektrischen Zwischenkreis auf, über den der mechanische Energiespeicher, insbesondere dessen Energiespeichermittel, mit wenigstens einem Manipulatorantrieb elektrisch verbunden ist. Ein Zwischenkreis im Sinn der Erfindung kann insbesondere eine elektrische Einrichtung sein, die mehrere elektrische Netze auf einer gemeinsamen Strom- oder Spannungsebene, insbesondere über Umrichter, elektrisch koppelt. Ein Umrichter im Sinn der Erfindung kann insbesondere ein Stromrichter sein, der aus einem Gleich- oder Wechselstrom (sowohl Einphasenwechselstrom als auch Dreiphasenwechselstrom) mit bestimmter Frequenz eine in Amplitude und Frequenz veränderbare Spannung generiert. Mit dieser umgerichteten Spannung wird ein Verbraucher, in der Regel ein Drehstrommotor, betrieben. Eine elektrische Maschine eines mechanischen Energiespeichers weist vorzugsweise einen Umrichter und/oder einen Drehstrommotor auf. Weiterhin enthält der mechanische Energiespeicher, insbesondere die Umrichter und/oder der Motor, in einer bevorzugten Ausführung Komponenten, die auch für die Manipulatorantriebe eingesetzt werden. Vorteilhaft können dadurch Skaleneffekte genutzt und eine kosteneffiziente Manipulatoranordnung realisiert werden.

Nach einer bevorzugten Weiterbildung sind ein oder mehrere Energiespeichermittel des mechanischen Energiespeichers zum Speichern kinetischer Energie eingerichtet. Nach einem ersten Aspekt dieser Weiterbildung weisen ein oder mehrere Energiespeichermittel des mechanischen Energiespeichers eine oder mehrere Bewegungseinrichtungen auf, die eine Masse linear oder auf einer gekrümmten, insbesondere kreisförmigen, Bahn beschleunigen und verzögern können. Vorzugsweise sind diese auch als Linearmotor ausgeführt.

Zusätzlich oder alternativ können ein oder mehrere Energiespeichermittel des mechanischen Energiespeichers eine oder mehrere rotatorische Bewegungseinrichtungen aufweisen, die insbesondere eine rotierende Masse, insbesondere ein oder mehrere Schwungräder, beschleunigen und verzögern können. Bevorzugt ist ein Schwungrad direkt oder über ein Getriebe mit einem Rotationsmotor verbunden. Die kinetische Energie einer rotierenden Masse und damit die gespeicherte bzw. die entnommene Energie $E^{kin}_{ES}$ eines oder mehrerer Energiespeichermittel des mechanischen Energiespeichers steigt linear mit dem Massenträgheitsmoment und quadratisch mit der Winkelgeschwindigkeit:

$$E^{kin}_{ES} = \int_{t_1}^{t_2} P_{mech}\,dt = \int_{t_1}^{t_2} M \cdot \omega \; dt = \int_{t_1}^{t_2} J \cdot \dot{\omega} \cdot \omega \; dt = \int_{\omega_1}^{\omega_2} J \cdot \omega \; d\omega = \frac{1}{2} J(\omega_1^2 - \omega_2^2) \, ,$$

wobei $P_{mech}$ die mechanische Leistung, t die Zeit, M das Moment, J das Massenträgheitsmoment und $\omega$ die Winkelgeschwindigkeit der rotierenden Masse bezeichnet. Dementsprechend ist es möglich, kinetische Energie durch entsprechend hohe Drehzahlen und/oder durch entsprechend hohe Schwungmassen zu speichern.

Daher ist in einer bevorzugten Weiterbildung ein oder mehrere Energiespeichermittel des mechanischen Energiespeichers der Manipulatoranordnung mit einer elektrischen Maschine ausgestattet, die eine hohe Drehzahlkapazität aufweist, vorzugsweise wenigstens 1.000, insbesondere wenigstens 5.000, insbesondere wenigstens 10.000, insbesondere wenigstens 20.000 Umdrehungen pro Minute. Vorzugsweise werden ein oder mehrere Energiespeichermittel des mechanischen Energiespeichers in einem Drehzahlbereich, insbesondere zwischen einer Mindest- und einer Höchstdrehzahl betrieben, der bzw. die größer ist als 1.000, insbesondere größer als 5.000 und/oder kleiner als 20.000, insbesondere kleiner als 10.000, insbesondere kleiner als 5.000 Umdrehungen pro Minute. Je höher die Ausgangsdrehzahl $\omega_1$ einer rotierenden Masse, desto geringer muss gemäß o.g. Gleichung die Enddrehzahl $\omega_2$ sein, um eine bestimmte Energie $E^{kin}_{ES}$ zu speichern. Im Vergleich zu einem alternierend, ohne Mindestdrehzahl $\omega_1$ betriebenen Manipulatorantrieb werden ein oder mehrere Energiespeichermittel des mechanischen Energiespeichers vorzugsweise bei deutlich erhöhten Mindestdrehzahl $\omega_1$ betrieben. Da die Leistung von der Drehzahl abhängig ist, kann mit der erhöhten Mindestdrehzahl $\omega_1$ eines oder mehrerer Energiespeichermittel des mechanischen Energiespeichers der gesamte Leistungsbedarf des Manipulators, insbesondere alle Manipulatorantriebe, bei höheren Strömen abgedeckt werden. Ein oder mehrere Energiespeichermittel eines solchen Energiespeichers können dadurch vorteilhaft mit kleineren Umrichtern und/oder Motoren mit geringerer Momentenkapazität ausgestattet werden, als ein mechanischer Energiespeicher, der ohne Ausgangsdrehzahl betrieben wird. Vorzugsweise wird das Massenträgheitsmoment der Schwungmasse mit der Drehzahlkapazität, insbesondere energieumsatzoptimiert an den Energiegehalt des Manipulators angepasst. Hierbei wird unter Energieumsatz insbesondere die Menge an Energie verstanden, die aus dem Energiespeicher an dem Manipulator zurückgespeist wird.

Zusätzlich oder alternativ zum Speichern kinetischer Energie kann die Manipulatoranordnung zum Speichern potentieller Energie eingerichtet sein. Bevorzugt weisen ein oder mehrere Energiespeichermittel des mechanischen Energiespeichers dazu ein oder mehrere elastische Deformationsmittel und/oder Hubeinrichtungen auf, die von einer oder mehreren elektrischen Maschinen der ein oder mehreren Energiespeichermittel des mechanischen Energiespeichers aktuiert werden, um potentielle Energie zu speichern. Vorteilhaft können ein elastisches Deformationsmittel und/oder eine Hubeinrichtung über ein Getriebe betrieben werden, so dass ein oder mehrere Energiespeichermittel des mechanischen Energiespeichers, insbesondere deren Umrichter und/oder Motoren, in kompakter Bauweise realisierbar sind. Ein oder mehrere translatorische und/oder rotatorische Bewegungseinrichtungen, Hubeinrichtungen, durch diese bewegte Massen und/oder elastische Deformationsmittel können jeweils ein Energiespeichermittel im Sinne der vorliegenden Erfindung bilden.

Nach einer bevorzugten Weiterbildung sind ein oder mehrere Energiespeichermittel des mechanischen Energiespeichers sowohl zum Speichern kinetischer als auch zum Speichern potenzieller Energie eingerichtet. Bevorzugt ist dies über eine oder mehrere Massen realisiert, welche jeweils elastisch an eine oder mehrere starre Antriebswellen gekoppelt sind. Vorzugsweise ist eine Kopplung torsionselastisch ausgeführt, so dass bei einer Beschleunigung einer Masse kinetische und potentielle Energie gespeichert wird.

Nach einer bevorzugten Ausführung weist der mechanische Energiespeicher ein, zwei oder mehrere, insbesondere wiederaufladbare, elektrische, elektrochemische und/oder elektrophysikalische Energiespeichermittel auf, insbesondere eine oder mehrere Batterien, vorzugsweise Sekundärbatterien, ein oder mehrerer Akkumulatoren, eine oder mehrere Brennstoffzellen, einen oder mehrere Kondensatoren und/oder ein oder mehrere thermische Energiespeicher.

Ein elektrisches Energiespeichermittel im Sinn der vorliegenden Erfindung kann insbesondere dazu eingerichtet sein, Energie in elektrischer Form, insbesondere elektrostatisch und/oder elektrodynamisch, vorzugsweise kapazitiv, zu speichern.

Ein elektrochemisches Energiespeichermittel im Sinn der vorliegenden Erfindung kann insbesondere dazu eingerichtet sein, Energie durch chemische Prozesse, insbesondere durch eine endotherme Reaktion, zu speichern und/oder, insbesondere durch eine exotherme Reaktion, abzugeben.

Ein elektrophysikalisches Energiespeichermittel im Sinn der vorliegenden Erfindung kann insbesondere dazu eingerichtet sein, Energie durch physikalische Prozesse, insbesondere in thermischer Form, vorzugsweise durch Erwärmen eines Wärmespeichermittels, zu speichern und/oder, insbesondere durch Abkühlen eines Wärmespeichermittels, abzugeben.

Nach einer bevorzugten Ausführung weisen ein oder mehrere Energiespeichermittel des mechanischen Energiespeichers einen Motor oder mehrere Motoren auf. Vorzugsweise können auch Manipulatoren ein, insbesondere mechanisches, Energiespeichermittel bilden.

Nach einer bevorzugten Weiterbildung weist die Manipulatoranordnung einen mechanischen Energiespeicher auf, der mit einer Umhüllung ausgestattet ist. Unter einer Umhüllung im Sinne der Erfindung wird insbesondere eine Einrichtung verstanden, welche den mechanischen Energiespeicher, insbesondere eines oder mehrere seiner Energiespeichermittel, jeweils ganz oder teilweise umgibt und zu den anderen Komponenten der Manipulatoranordnung abgrenzt. Bevorzugt ist die Umhüllung formsteif ausgebildet und besteht insbesondere aus Metall, Kunststoff und/oder einem Verbundmaterial, vorzugsweise mit hoher Durchschlagesfestigkeit. Dies bietet insbesondere den Vorteil, dass eine mit hoher Drehzahl rotierende Masse im Fehlerfall keine Gefahr für umliegende Komponenten darstellt, wenn Teile der mechanischen Energiespeichereinrichtung zur Umwelt hin weggeschleudert werden. Bevorzugt ist die Umhüllung geschlossen und/oder als Käfig ausgeführt. Weiterhin bevorzugt bietet die Umhüllung dem mechanischen Energiespeicher Schutz gegen Umwelteinflüsse, insbesondere gegen Temperaturschwankungen, Fluide, Feuchtigkeiten, Krafteinwirkungen und/oder Druckeinwirkungen.

Nach einer bevorzugten Weiterbildung weist die Manipulatoranordnung einen mechanischen Energiespeicher auf, der wenigstens teilweise evakuiert ist. Vorzugsweise sind ein oder mehrere, insbesondere alle, Energiespeichermittel wenigstens teilweise evakuiert. Zur Reduktion von Reibungsverlusten im Betriebszustand ein oder mehrerer Energiespeichermittel des mechanischen Energiespeichers, insbesondere eines Schwungrades, ist es zweckdienlich, mittels einer Vakuumpumpe ein (Teil)Vakuum innerhalb der Umhüllung zu erzeugen. Zusätzlich oder alternativ können dadurch chemisch aktive Stoffe, wie beispielsweise Sauerstoff, aus der direkten Umgebung des mechanischen Energiespeichers abgesaugt werden. Insbesondere für ein oder mehrere Energiespeichermittel des mechanischen Energiespeichers mit einem schnell rotierenden Schwungrad wird durch die Evakuierung eine mechanische Anregung aggressiver Substanzen durch das Schwungrad vermieden, die ansonsten aufgrund gesteigerter chemischer Reaktivität zu Schäden an den Komponenten des mechanischen Energiespeichers führen könnten.

Nach einer bevorzugten Weiterbildung weist die Manipulatoranordnung einen oder mehrere Energiespeichermittel des mechanischen Energiespeichers auf, die eine oder mehrere Betriebs- und/oder Feststellbremsen zum Abbremsen und/oder Festhalten aufweisen. Bevorzugt sind diese Bremsen dazu eingerichtet, antriebsseitig eine, insbesondere durch eine elektrische Maschine eines Energiespeichermittels erzeugte, kinetische Energie zu dissipieren. Insbesondere können eine oder mehrere Bremsen als Sicherheitsbremsen ausgelegt sein. Eine Sicherheitsbremse im Sinn der Erfindung ist insbesondere eine Bremse, die im energielosen Zustand geschlossen ist bzw. aktiv gelüftet und dadurch gelöst werden muss. Das Bremsmoment beziehungsweise die Bremskraft wird vorzugsweise über vorgespannte Federn erzeugt. Die Bremsen werden vorzugsweise elektromagnetisch, hydraulisch und/oder pneumatisch gelüftet. In einer bevorzugten Ausführung ist eine oder mehrere Bremsen redundant ausgelegt, so dass bei Ausfall eines Bremsmittels noch wenigstens ein weiteres Bremsmittel dazu eingerichtet ist, kinetische Energie zu dissipieren und/oder eine Bewegung des Energiespeichers, insbesondere eines Energiespeichermittels, zu verhindern.

Nach einer bevorzugten Weiterbildung weist die Manipulatoranordnung einen mechanischen Energiespeicher auf, der lösbar mit der Manipulatoranordnung verbunden ist und insbesondere als Komponente der Manipulatoranordnung wahlweise in die Manipulatoranordnung eingefügt werden kann. Vorzugsweise sind die einzelnen Energiespeichermittel lösbar ausgebildet und als Einzelkomponenten handhabbar. Dazu weist der mechanische Energiespeicher, insbesondere dessen Energiespeichermittel, in einer bevorzugten Ausführung vorbestimmte mechanische und/oder elektrische Schnittstellen auf. Insbesondere ist der mechanische Energiespeicher, insbesondere dessen Energiespeichermittel, mit einer, zwei, drei oder vier Steckverbindungen ausgestattet, insbesondere um Energie und/oder Datenleitungen, insbesondere Bussysteme, insbesondere zwischen dem mechanischen Energiespeicher und einer anderen Komponente der Manipulatoranordnung, miteinander zu verbinden.

Bevorzugt ist der mechanische Energiespeicher, insbesondere dessen Energiespeichermittel mit einer, zwei oder mehr Befestigungsmitteln ausgestattet, insbesondere um den mechanischen Energiespeicher, insbesondere einzelne Energiespeichermittel, an anderen Komponenten der Manipulatoranordnung dauerhaft oder lösbar zu befestigen. Bevorzugt ist wenigstens ein Befestigungsmittel als Schnellspanneinrichtung ausgeführt. Vorteilhaft kann eine Manipulatoranordnung dadurch einfach mit einem mechanischen Energiespeicher nachgerüstet werden und/oder ein mechanischer Energiespeicher kann einfach mit einem oder mehreren Energiespeichermitteln nachgerüstet werden. Weiterhin vorteilhaft kann ein mechanischer Energiespeicher, insbesondere dessen Energiespeichermittel, einer Manipulatoranordnung durch vordefinierte Schnittstellen in anderen Manipulatoranordnungen eingesetzt werden.

In einer bevorzugten Ausgestaltung weist die Manipulatoranordnung einen mechanischen Energiespeicher auf, der transportabel ausgestaltet ist. Vorzugsweise sind einzelne oder alle Energiespeichermittel des mechanischen Energiespeichers transportabel ausgestaltet. Der mechanische Energiespeicher, insbesondere dessen Energiespeichermittel, ist vorzugsweise so ausgestaltet, dass er lösbar und/oder beweglich mit der Umgebung, insbesondere einem Manipulator, verbindbar ist und/oder von einem Transportgerät, insbesondere einem Gabelstapler oder einem fahrerlosen Transportsystem, aufgenommen und/oder umpositioniert werden kann. Gleichermaßen kann auch der mechanische Energiespeicher, insbesondere dessen Energiespeichermittel, fahrbar und/oder tragbar ausgebildet sein, beispielsweise, vorzugsweise feststellbare, Rollen aufweisen.

Vorzugsweise besitzt der mechanische Energiespeicher, insbesondere dessen Energiespeichermittel, eine standardisierte Form. Insbesondere ist der mechanische Energiespeicher und/oder dessen Energiespeichermittel eingerichtet, in einen Standardschaltschrank, insbesondere in einen 19"-Einschub, integriert zu werden.

In einer bevorzugten Weiterbildung ist die Manipulatoranordnung mit einem mechanischen Energiespeicher ausgestattet, der eine Steuerung aufweist. Insbesondere können auch einzelne Energiespeichermittel eine Steuerung aufweisen. Die Steuerung übernimmt vorzugsweise die Registrierung von Komponenten sowie die Ansteuerung aktiver Komponenten des Energiespeichers, insbesondere eines Umrichters, der elektrischen Maschine, und/oder einer Bremse. Bevorzugt ist die Steuerung dazu eingerichtet, eine Regelung der elektrischen Maschine vorzunehmen, vorzugsweise den Drehzahlbereich, insbesondere vorzugsweise eine Drehzahl und/oder eine Spannung einzustellen. Bevorzugt übernimmt die Steuerung die Kommunikation von Information zwischen dem mechanischen Energiespeicher, insbesondere eines oder mehrerer Energiespeichermittel mit anderen Komponenten der Manipulatoranordnung. Vorzugsweise weist die Steuerung dafür eine Busschnittstelle auf. Bevorzugt ist die Steuerung dazu eingerichtet, Sicherheitsfunktionen des mechanischen Energiespeichers und/oder der Energiespeichermittel auszuführen, insbesondere einen Stop einzuleiten und/oder eine Bremse zu aktivieren. Vorteilhaft kann der mechanische Energiespeicher dadurch einfach nachgerüstet und/oder erweitert werden oder in verschiedene Manipulatoranordnungen integriert sein.

In einer bevorzugten Weiterbildung ist die Steuerung der Manipulatoranordnung zum Steuern des mechanischen Energiespeichers, insbesondere zum Steuern von dessen Energiespeichermitteln, eingerichtet. Die Steuerung übernimmt die Registrierung der Komponenten sowie die Ansteuerung der aktiven Komponenten des mechanischen Energiespeichers, insbesondere eines Umrichters, der elektrischen Maschine, und/oder einer Bremse. Bevorzugt ist die Steuerung dazu eingerichtet eine Regelung der elektrischen Maschine vorzunehmen, vorzugsweise den Drehzahlbereich, insbesondere eine Drehzahl, und/oder eine Spannung einzustellen. Weiterhin bevorzugt übernimmt die Steuerung die Kommunikation von Information über den mechanischen Energiespeicher mit anderen Komponenten der Manipulatoranordnung, insbesondere weist die Steuerung dafür eine Busschnittstelle auf. Insbesondere bevorzugt ist die Steuerung dazu eingerichtet Sicherheitsfunktionen des mechanischen Energiespeichers und/oder dessen Energiespeichermitteln auszuführen, insbesondere einen Stop einzuleiten und/oder eine Bremse zu aktivieren.

Bevorzugt werden ein oder mehrere Energiespeichermittel des mechanischen Energiespeichers als eine oder mehrere (weitere) Achsen der Manipulatoranordnung registriert und/oder angesteuert. Eine Achse im Sinn der vorliegenden Erfindung ist insbesondere eine ansteuerbare Antriebseinheit eines Manipulators, die vorzugsweise dazu eingerichtet ist, ein Manipulatorgelenk anzutreiben. Dadurch werden vorteilhaft die bereits in der Manipulatorsteuerung vorhandenen Rechenkapazitäten und/oder Steuerungsfunktionalitäten und -strukturen genutzt, insbesondere, um den mechanischen Energiespeicher und/oder ein oder mehrere Energiespeichermittel einfach zu integrieren. Mit anderen Worten kann der Energiespeicher wie eine bzw. mehrere Antriebsachsen der Manipulatoranordnung gehandhabt werden, beispielsweise Drehzahlen, Momenten, und/oder Strom geregelt und dergleichen.

Vorzugsweise kommuniziert die Steuerung der Manipulatoranordnung mit einer Steuerung des mechanischen Energiespeichers. Vorteilhaft können dadurch spezifische Funktionalitäten, die beispielsweise allein für den mechanischen Energiespeicher benötigt werden, durch die lokale Steuerung implementiert sein. Solche lokalen Steuerungsfunktionalitäten können insbesondere die Ansteuerung eines oder mehrerer Umrichter und/oder einer der elektrischen Maschine eines oder mehrerer Energiespeichermittel des mechanischen Energiespeichers darstellen. Weiterhin können solche Funktionalitäten die Ansteuerung der Bremse betreffen. Vorzugsweise betrifft eine lokale Steuerungsfunktionalität eine verteilte Ansteuerung mehrerer Energiespeichermittel, um Energie zu speichern und/oder bereitzustellen.

Ein erfindungsgemäßes Verfahren dient dem Betrieb einer Manipulatoranordnung zum Speichern, insbesondere Zwischenspeichern von vorzugsweise alternierender Energie der Manipulatoranordnung, insbesondere Bremsenergie, in einem mechanischen Energiespeicher. Vorzugsweise ermöglicht das Verfahren das Speichern von Energie eines oder mehrerer Manipulatoren. Vorzugsweise wird Energie der betreffenden Manipulatoren in einem und oder mehreren Energiespeichermitteln des mechanischen Energiespeichers gespeichert. Eine Speicherung von Energie eines oder mehrerer Manipulatoren in mehreren Energiespeichermitteln wird insbesondere durch eine statische Zuordnung realisiert. Vorteilhaft wird die Energie eines oder mehrerer Manipulatoren dynamisch verschiedenen Energiespeichermitteln des mechanischen Energiespeichers zugeführt und damit insbesondere eine optimale Energiespeicherung entsprechend vorbestimmter Gütefunktionen und/oder Gütefunktionalen erreicht. In energieumsatzoptimierter Art und Weise kann eine optimale Bereitstellung von Energie realisiert werden.

Entsprechend einer bevorzugten Weiterbildung werden ein oder mehrere Manipulatoren mit Energie aus dem mechanischen Energiespeicher versorgt, insbesondere bewegt. Die Bereitstellung von Energie erfolgt dabei vorzugsweise durch eine statische Zuordnung eines oder mehrerer Energiespeichermittel des mechanischen Energiespeichers auf die Manipulatorantriebe eines oder mehrerer Manipulatoren. Vorteilhaft erfolgt die Bereitstellung von Energie eines oder mehrerer Energiespeichermittel des mechanischen Energiespeichers auf die Manipulatorantriebe eines oder mehrerer Manipulatoren nach einer dynamischen Zuordnung.

In einer bevorzugten Weiterbildung des Verfahrens wird Energie durch den mechanische Energiespeicher last- und/oder zustandsabhängig gespeichert und/oder bereitstellt. Ein solche Speicherung und/oder Bereitstellung kann insbesondere durch eine dynamische Zuordnung eines oder mehrerer Energiespeichermittel umgesetzt werden. Vorzugsweise erfolgt eine last- und/oder zustandsabhängig Speicherung und/oder Bereitstellung mittels einer dynamischen Zuordnung von einer oder mehrerer Energiespeichermittel des mechanischen Energiespeichers zu einem oder mehreren Manipulatorantrieben eine oder mehrerer Manipulatoren der Manipulatoranordnung.

Weitere Vorteile, Merkmale und Anwendungsmöglichkeiten der vorliegenden Erfindung ergeben sich aus der nachfolgenden Beschreibung in Zusammenhang mit den Figuren. Diese zeigen, teilweise schematisiert:

Fig. 1: eine Manipulatoranordnung gemäß einer Ausführungsform der vorliegenden Erfindung; und

Fig. 2: eine Verfahren zum Betreiben der Manipulatoranordnung nach einer Ausführungsform der vorliegenden Erfindung.

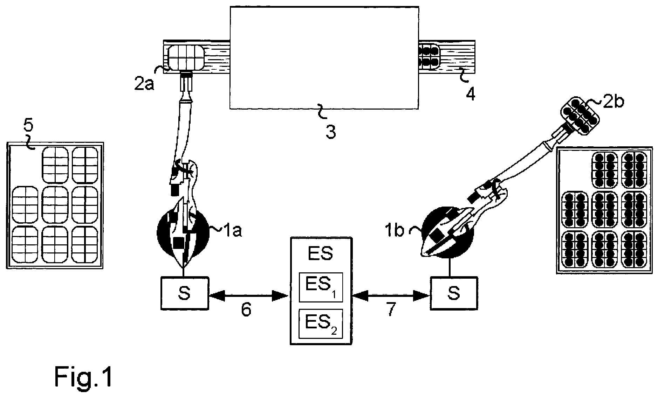

Fig. 1 zeigt eine Manipulatoranordnung gemäß einer Ausführungsform der vorliegenden Erfindung. In einer Kommissionierapplikation werden leere Kisten 2a durch eine Befüllungsanlage 3 mit Flaschen befüllt. Dazu werden die leeren Kisten von einem Roboter 1a auf ein Förderband 4 positioniert, durchlaufen die Befüllungsanlage 3 und werden auf der anderen Seite der Befüllungsanlage durch einen zweiten Roboter 1b auf eine Zielpalette 5 kommissioniert. Die Befüllungsanlage arbeitet mit hoher Geschwindigkeit, so dass die leeren Kisten 2a und die befüllten Kisten 2b in schneller Folge auf das Förderband positioniert werden müssen sowie vom Förderband nach Befüllung wieder entfernt werden müssen. Die beiden Roboter 1a, 1b führen dabei hochalternierende Bewegungen zwischen den Paletten und dem Förderband durch. Die Steuerungen S beider Roboter sind mit einem mechanischen Energiespeicher ES verbunden, der zwei Energiespeichermittel $ES_1$ und $ES_2$ aufweist. Die Energiespeichermittel sind transportierbar eingerichtet, so dass die Befüllungsanlage flexibel aufgebaut werden kann. Der mechanische Energiespeicher ES und die Steuerungen S der Roboter 1a, 1b sind über einen Leistungsbus miteinander verbunden. Hierbei kann der Leistungsbus in Leistungsbusabschnitte 6, 7 über zwei Leistungsbusschnittstellen unterteilt sein. Bevorzugt kann der mechanische Energiespeicher und/oder die Energiespeichermittel ein Gehäuse aufweisen, welches den mechanischen Energiespeicher bevorzugt vor typischen Umwelteinflüssen in einem Kommissionierbetrieb, insbesondere Fluide und Schmutz, schützt. Vorteilhaft schützt das Gehäuse die Umwelt des mechanischen Energiespeichers, insbesondere die Maschinen und Bediener vor einer Fehlfunktion des mechanischen Energiespeichers. Insbesondere zur Vermeidung von Gefahren durch herausgeschleuderte Teile des mechanischen Energiespeichers, kann das Gehäuse einen Schutzkäfig aufweisen, welches den mechanischen Energiespeicher umgibt und/oder zwei Schutzkäfige, wobei jeweils eine Schutzkäfig eines der beiden Energiespeichermittel umgibt.

Durch die Verbindung der beiden Roboter 1a, 1b über einen Leistungsbus mit dem Energiespeicher ES kann die Energie der verzögernden Roboterantriebe eines Roboters 1a, 1b direkt genutzt werden, um die Roboterantriebe des anderen Roboters 1b, 1a zu beschleunigen. Dadurch werden einerseits Energieverluste vermieden und andererseits die im Durchschnitt vom Energiespeicher ES zu speichernde Energiemenge auf einem möglichst geringen Niveau gehalten, so dass der Energiespeicher ES energieoptimiert dimensioniert werden kann. Vorteilhafterweise können zusätzliche Kosten für unnötig bereitgestellte Speicherkapazität eingespart werden.

Bei geeigneter Dimensionierung der Dynamik und der Kapazität der mechanischen Energiespeicher wird durch diese Architektur gewährleistet, dass zu jedem Zeitpunkt die größtmögliche überschüssige Energie gespeichert werden kann bzw. die größtmögliche regenerative Energiemenge von allen energiebedürftigen Roboter wiederverwendet werden kann. Bevorzugt ist eine dynamische Zuordnung der Energiespeichermittel eingerichtet. Dies kann insbesondere vorteilhaft sein, wenn durch Bremsphasen erzeugte elektrische Energie $E^{el}_M$ verlustfrei erhalten werden soll.

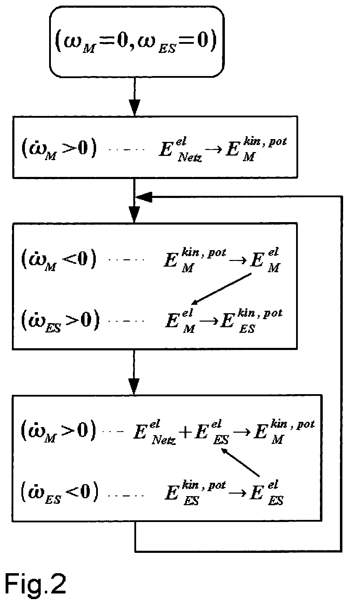

Fig. 2 zeigt ein Verfahren gemäß einer Ausführungsform zum Betreiben einer Manipulatoranordnung mit einem Manipulator und einem mechanischem Energiespeicher mit einem Energiespeichermittel. Am Start befindet sich der Manipulator im Stillstand $\omega_M$=0 und der Ladezustand des mechanischen Energiespeichers beträgt Null, $\omega_{ES}$=0. In einem ersten Schritt wird der Manipulator zunächst mit Energie einer externen Energiequelle $E^{el}_{Netz}$, vorzugsweise einer Batterie und/oder aus einem Energieversorgungsnetz, beschleunigt und eine mechanische Energie aufgebaut $E^{kin,pot}_M$. In einem zweiten Schritt wird der Manipulator generatorisch abgebremst, so dass mechanische Energie $E^{kin,pot}_M$ in elektrische Energie $E^{el}_M$ umgewandelt wird. In dieser Phase wird diese Energie vom mechanischen Energiespeicher gespeichert, indem dieser mechanische Energie $E^{kin,pot}_{ES}$ aufbaut. In einer dritten Phase beschleunigt der Manipulator wieder und nutzt dazu Energie aus dem mechanischen Energiespeicher $E^{el}_{ES}$, der dabei generatorisch abbremst. Die Differenz zwischen benötigter Energie $E^{kin,pot}_M$ und der Energie $E^{el}_{ES}$, die vom mechanischen Energiespeicher bereitgestellt wird, wird durch die Energie $E^{el}_{Netz}$ aus der externen Energiequelle ausgeglichen. Die Schritte zwei und drei können sich wiederholen, insbesondere solange bis der Manipulator wieder im Stillstand ist und der Ladezustand des mechanischen Energiespeichers wieder Null beträgt.

Bezugszeichenliste

1a     Roboter
1b     Roboter
2a     leere Kiste
2b     befüllte Kiste
3     Befüllungsanlage
4     Förderband
5     Palette
6, 7     Leistungsbus
S     Steuerung
ES     mechanischer Energiespeicher
$ES_1$     erstes Energiespeichermittel
$ES_2$     zweites Energiespeichermittel
$\omega_{ES}$     Geschwindigkeit des mechanischen Energiespeichers
$\dot{\omega}_{ES}$     Beschleunigung des mechanischen Energiespeichers
$\omega_M$     Geschwindigkeit eines Manipulatorantriebs
$\dot{\omega}_M$     Beschleunigung eines Manipulatorantriebs
$E^{el}_{Netz}$     von externer Energiequelle bereitgestellte elektrische Energie
$E^{el}_{ES}$     vom mechanischen Energiespeicher bereitgestellte elektrische Energie
$E^{kin,pot}_{ES}$     vom mechanischen Energiespeicher aufgebaute mechanische Energie

$E_M^{el}$    vom Manipulator erzeugte elektrische Energie

$E_M^{kin,pot}$    vom Manipulator aufgebaute mechanische Energie

**Patentansprüche**

1.   Manipulatoranordnung mit wenigstens einem Manipulator (1a,1b), wenigstens einer Steuerung (S) und einem mechanischen Energiespeicher (ES), der dazu eingerichtet ist, Energie von wenigstens einem Manipulator (1a,1b) zu speichern, insbesondere zwischenzuspeichern, **dadurch gekennzeichnet, dass** der mechanische Energiespeicher (ES) mehrere voneinander entkoppelte Energiespeichermittel (ES$_1$, ES$_2$) aufweist, die zum Speichern mechanischer Energie eingerichtet sind.

2.   Manipulatoranordnung nach Anspruch 1,
**dadurch gekennzeichnet, dass**
der mechanische Energiespeicher (ES) mit einer elektrischen Maschine gekoppelt ist, um wenigstens eine von elektrischer und mechanischer Energie in die andere von elektrischer und mechanischer Energie zu überführen.

3.   Manipulatoranordnung nach einem der vorherigen Ansprüche,
**dadurch gekennzeichnet, dass** der mechanische Energiespeicher (ES) wenigstens teilweise evakuiert ist.

4.   Manipulatoranordnung nach einem der vorherigen Ansprüche,
**dadurch gekennzeichnet, dass**
der mechanische Energiespeicher (ES) zum Speichern kinetischer Energie, insbesondere durch eine rotierende Masse, und/oder
potenzieller Energie eingerichtet ist.

5.   Manipulatoranordnung nach einem der vorherigen Ansprüche,
**dadurch gekennzeichnet, dass**
der mechanische Energiespeicher (ES), insbesondere über einen Zwischenkreis, mit wenigstens einem Manipulatorantrieb der Manipulatoranordnung verbunden ist.

6.   Manipulatoranordnung nach einem der vorherigen Ansprüche,
**gekennzeichnet durch**,
ein weiteres Energiespeichermittel (ES$_1$, ES$_2$), das zum elektrischen,
elektrochemischen und/oder elektrophysikalischen Speichern von Energie ausgebildet ist.

7.   Manipulatoranordnung nach einem der vorherigen Ansprüche,
**gekennzeichnet durch**,
ein weiteres Energiespeichermittel (ES$_1$, ES$_2$), das zum dauerhaft verlustfreien Speichern von Energie ausgebildet ist.

8.   Manipulatoranordnung nach einem der vorherigen Ansprüche,
**dadurch gekennzeichnet, dass** mindestens ein Energiespeichermittel (ES1, ES2) des mechanischen Energiespeichers (ES) eine rotatorische Bewegungseinrichtung aufweist, die dazu eingerichtet ist, in einem vorgegebenen Drehzahlbereich, insbesondere mit einer vorgegebenen Drehzahl, betrieben zu werden.

9.   Manipulatoranordnung nach einem der vorherigen Ansprüche,
**dadurch gekennzeichnet, dass**
der mechanische Energiespeicher (ES) lösbar und/oder beweglich mit der Manipulatoranordnung verbunden und/oder beweglich, insbesondere tragbar, ausgestaltet ist.

10. Manipulatoranordnung nach einem der vorherigen Ansprüche,
**dadurch gekennzeichnet, dass**
der mechanische Energiespeicher (ES) eine Steuerung (S) aufweist, die zum Steuern und/oder Regeln des mechanischen Energiespeichers eingerichtet ist.

**11.** Manipulatoranordnung nach einem der vorherigen Ansprüche,
**dadurch gekennzeichnet, dass**
die Steuerung (S) der Manipulatoranordnung zum Steuern des mechanischen Energiespeichers eingerichtet ist.

**12.** Verfahren zum Betreiben einer Manipulatoranordnung nach einem der vorherigen Ansprüche, wobei mechanische Energie der Manipulatoranordnung, insbesondere Bremsenergie, in dem mechanischen Energiespeicher (ES) gespeichert, insbesondere zwischengespeichert, wird; und/oder
wenigstens ein Manipulator (1a,1b) mit Energie aus dem mechanischen Energiespeicher (ES) versorgt, insbesondere bewegt, wird.

**13.** Verfahren nach dem vorherigen Anspruch,
**dadurch gekennzeichnet, dass**
der mechanische Energiespeicher (ES) last- und/oder zustandsabhängig Energie speichert und/oder bereitstellt.

**Claims**

**1.** A manipulator configuration comprising at least one manipulator (1a, 1b), at least one control (S) and a mechanical energy storage (ES) which is configured to store, in particular temporarily store, energy from at least one manipulator (1 a, 1 b), **characterized in that** the mechanical energy storage (ES) comprises a plurality of energy storage means (ES$_1$, ES$_2$) decoupled from one another which are configured to store mechanical energy.

**2.** The manipulator configuration according to claim 1,
**characterized in that**
the mechanical energy storage (ES) is coupled to an electrical machine for converting at least one of electrical and mechanical energy into the other of electrical and mechanical energy.

**3.** The manipulator configuration according to one of the preceding claims,
**characterized in that** the mechanical energy storage (ES) is at least partially evacuated.

**4.** The manipulator configuration according to one of the preceding claims,

**characterized in that**
the mechanical energy storage (ES) is configured to store kinetic energy, in particular by means of a rotating mass, and/or potential energy.

**5.** The manipulator configuration according to one of the preceding claims,
**characterized in that**
the mechanical energy storage (ES) is connected to at least one manipulator drive of the manipulator configuration, in particular via an intermediate circuit.

**6.** The manipulator configuration according to one of the preceding claims,
**characterized by**
a further energy storage means (ES$_1$, ES$_2$), which is configured to store energy electrically, electrochemically and/or electrophysically.

**7.** The manipulator configuration according to one of the preceding claims,
**characterized by**
a further energy storage means (ES$_1$, ES$_2$) which is configured to store energy permanently without loss.

**8.** The manipulator configuration according to one of the preceding claims,
**characterized in that**
at least one energy storage means (ES1, ES2) of the mechanical energy storage device (ES) comprises a rotational movement device which is configured to be operated in a predetermined speed range, in particular at a predetermined speed.

**9.** The manipulator configuration according to one of the preceding claims,
**characterized in that**

the mechanical energy storage device (ES) is detachably and/or movably connected to the manipulator configuration and/or is designed movable, in particular portable.

10. The manipulator configuration according to one of the preceding claims,
**characterized in that**
the mechanical energy storage (ES) comprises a control (S) which is configured to feedforward control and/or feedback control the mechanical energy storage.

11. The manipulator configuration according to one of the preceding claims,
**characterized in that**
the control (S) of the manipulator configuration is configured to control the mechanical energy storage.

12. A method for operating a manipulator configuration according to one of the preceding claims,
wherein
mechanical energy of the manipulator configuration, in particular braking energy, is stored, in particular temporarily stored, in the mechanical energy storage (ES); and or at least one manipulator (1a, 1b) is supplied, in particular moved, by energy from the mechanical energy storage (ES).

13. The method according to the preceding claim,
**characterized in that**
the mechanical energy storage (ES) stores and/or provides energy depending on a load and/or state.

**Revendications**

1. Ensemble de manipulateurs comprenant au moins un manipulateur (1a, 1b), au moins une commande (C), et un accumulateur d'énergie (AE) mécanique, qui est mis au point afin de stocker, en particulier stocker de manière temporaire, de l'énergie d'au moins un manipulateur (1a, 1b), **caractérisé en ce que** l'accumulateur d'énergie (AE) mécanique présente plusieurs moyens accumulateurs d'énergie ($AE_1$, $AE_2$) découplés les uns des autres, qui sont mis au point afin de stocker une énergie mécanique.

2. Ensemble de manipulateurs selon la revendication 1,
**caractérisé en ce**
**que** l'accumulateur d'énergie (AE) mécanique est couplé à une machine électrique afin de transformer au moins une énergie parmi l'énergie électrique et l'énergie mécanique en l'autre énergie parmi l'énergie électrique et l'énergie mécanique.

3. Ensemble de manipulateurs selon l'une quelconque des revendications précédentes,
**caractérisé en ce que** l'accumulateur d'énergie (AE) mécanique est mis sous vide au moins en partie.

4. Ensemble de manipulateurs selon l'une quelconque des revendications précédentes,
**caractérisé en ce**
**que** l'accumulateur d'énergie (AE) mécanique est mis au point afin de stocker de l'énergie cinétique, en particulier par une masse en rotation, et/ou une énergie potentielle.

5. Ensemble de manipulateurs selon l'une quelconque des revendications précédentes,
**caractérisé en ce**
**que** l'accumulateur d'énergie (AE) mécanique est relié, en particulier par l'intermédiaire d'un circuit intermédiaire, à au moins un entraînement de manipulateur de l'ensemble de manipulateurs.

6. Ensemble de manipulateurs selon l'une quelconque des revendications précédentes,
**caractérisé par**
un autre moyen accumulateur d'énergie ($AE_1$, $AE_2$), qui est réalisé afin de stocker, de manière électrique, électrochimique et/ou électrophysique, de l'énergie.

7. Ensemble de manipulateurs selon l'une quelconque des revendications précédentes,
**caractérisé par**
un autre moyen accumulateur d'énergie ($AE_1$, $AE_2$), qui est réalisé afin de stocker de l'énergie sans perte de manière prolongée.

8. Ensemble de manipulateurs selon l'une quelconque des revendications précédentes,
**caractérisé en ce**
**qu'**au moins un moyen accumulateur d'énergie ($AE_1$, $AE_2$) de l'accumulateur d'énergie (AE) mécanique présente un dispositif de déplacement en rotation, qui est mis au point afin de fonctionner dans une plage spécifiée de vitesses de rotation, en particulier à une vitesse de rotation spécifiée.

9. Ensemble de manipulateurs selon l'une quelconque des revendications précédentes,
**caractérisé en ce**
**que** l'accumulateur d'énergie (AE) mécanique est relié de manière amovible et/ou de manière mobile à l'ensemble de manipulateurs et/ou est configuré de manière mobile, en particulier de manière portative.

10. Ensemble de manipulateurs selon l'une quelconque des revendications précédentes,
**caractérisé en ce**
**que** l'accumulateur d'énergie (AE) mécanique présente une commande (C), qui est mise au point afin de commander et/ou de régler l'accumulateur d'énergie mécanique.

11. Ensemble de manipulateurs selon l'une quelconque des revendications précédentes,
**caractérisé en ce**
**que** la commande (C) de l'ensemble de manipulateurs est mise au point afin de commander l'accumulateur d'énergie mécanique.

12. Procédé servant à faire fonctionner un ensemble de manipulateurs selon l'une quelconque des revendications précédentes,
sachant que de l'énergie mécanique de l'ensemble de manipulateurs, en particulier une énergie de freinage, est stockée, en particulier est stockée de manière temporaire, dans l'accumulateur d'énergie (AE) mécanique ; et/ou en ce qu'au moins un manipulateur (1a, 1b) est alimenté en énergie provenant de l'accumulateur d'énergie (AE) mécanique, en particulier est déplacé avec cette dernière.

13. Procédé selon la revendication précédente,
**caractérisé en ce**
**que** l'accumulateur d'énergie (AE) mécanique stocke et/ou fournit de l'énergie en fonction de la charge et/ou de l'état.

Fig.1

$$\left(\omega_M = 0, \omega_{ES} = 0\right)$$

$$\left(\dot{\omega}_M > 0\right) \cdots E^{el}_{Netz} \rightarrow E^{kin,pot}_M$$

$$\left(\dot{\omega}_M < 0\right) \cdots E^{kin,pot}_M \rightarrow E^{el}_M$$

$$\left(\dot{\omega}_{ES} > 0\right) \cdots E^{el}_M \rightarrow E^{kin,pot}_{ES}$$

$$\left(\dot{\omega}_M > 0\right) \cdots E^{el}_{Netz} + E^{el}_{ES} \rightarrow E^{kin,pot}_M$$

$$\left(\dot{\omega}_{ES} < 0\right) \cdots E^{kin,pot}_{ES} \rightarrow E^{el}_{ES}$$

Fig.2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0914911 B1
- DE 102009054818 A1
- DE 102008019294 A1
- US 20090105877 A1